(19) Europäisches Patentamt

European Patent Office

Office européen des brevets

(11) Publication number: **0 147 004**
**B1**

# (12) EUROPEAN PATENT SPECIFICATION

(45) Date of publication of patent specification: **31.05.89**

(21) Application number: **84305160.8**

(22) Date of filing: **30.07.84**

(51) Int. Cl.⁴: **G 01 F 1/115,** G 01 F 1/12

(54) A digital flow meter for dispensing fluids.

(30) Priority: **21.11.83 US 553793**

(43) Date of publication of application:
**03.07.85 Bulletin 85/27**

(45) Publication of the grant of the patent:
**31.05.89 Bulletin 89/22**

(84) Designated Contracting States:
**DE FR GB IT**

(56) References cited:
**CH-A- 639 197**
**GB-A-1 452 353**
**GB-A-2 094 521**
**US-A-2 812 661**
**US-A-3 710 623**
**US-A-4 404 638**

(73) Proprietor: **GREAT PLAINS INDUSTRIES INC**
**1711 Longfellow Lane**
**Wichita Kansas 67207 (US)**

(72) Inventor: **Hall, Robert E.**
**5519 S. Santa Fe**
**Wichita Kansas 67216 (US)**

(74) Representative: **McCallum, William Potter et al**
**Cruikshank & Fairweather 19 Royal Exchange**
**Square**
**Glasgow G1 3AE Scotland (GB)**

Courier Press, Leamington Spa, England.

## Description

This invention relates to flow meters.

The invention is particularly concerned with flow meters comprising a housing defining a through-duct of circular cross-section, the duct having an inlet and an outlet so that the flow meter can be connected in a fluid delivery line. The housing has a turbine disposed in the duct for rotation on an axis coincident with a longitudinal centre-line of the duct, the turbine having a plurality of blades equally spaced around a cylindrical rotor. Spinning of the turbine is induced by flow of fluid in the delivery line through the duct, and measurement of the fluid quantity per unit time, or flow rate, is derived from the turbine speed, the latter being determined by electrical means including a non-contacting sensor relying upon inductive coupling or the like. Such flow meters are typically described in United States patent Specifications Nos. 2812661 (COX) and 3710623 (BOYD et al).

An object of the present invention is to provide a flow meter having a configuration of turbine blade to give an improved performance.

According to the present invention, there is provided a flow meter comprising a housing defining a through-duct of circular cross-section an inlet to and an outlet from the duct, a turbine disposed in the duct for rotation on an axis coincident with a longitudinal centre line of the duct, the turbine having a plurality of blades equally spaced around a cylindrical rotor, the configuration of each blade being such that with reference to a respective tangent to said rotor, each blade has a rotationally leading edge which is linear and substantially normal to said tangent and to the flow direction through the duct and is spaced ahead of the radial line through the tangent point of contact with the rotor, a rotationally trailing edge which is linear and substantially parallel to the said tangent, a first peripheral portion extending from the outer extremity of the leading edge and which is arcuate when viewed along said axis, a second peripheral portion which intersects said arcuate portion and which is straight and substantially normal to said tangent, an angle of incidence of about 30° measured between said flow direction and a chord intersecting the leading edge and the second peripheral portion, the surface of the blade facing the said inlet having a convex first surface portion extending from the leading edge and merging into a concave surface portion terminating at said second peripheral portion, and the surface of the blade remote from the said inlet being entirely convex.

A flow meter in accordance with the present invention has a low pressure drop between inlet and outlet across the turbine when in use with fluid being pumped through the duct. This minimises load on the pump. Moreover, such a flow meter accommodates flow rates from 13.6 to 136 litres per minute (3 - 30 gallons per minute), and is highly accurate and repeatable.

The flow meter incorporates a battery-powered digital counter with a liquid crystal display which meets the average consumer's needs in dispensing different types of fluids. The flow meter uses pulse sensing which does not draw current thus allowing extended battery life up to seven years. Also, the meter has a self-shutdown capability to further conserve the battery's energy. The turbine-type design with solid state electronics allows for compact portable packaging.

Conveniently, a 4-digit, 127 mm (0.5 inches) high LCD display on the flow meter shows the volume of fluids that has passed through the turbine since the counter was re-set. The display is capable of receiving a high resolution signal, i.e. 170 pulses per litre (770 pulses per gallon).

Further, the counter may be re-set to 0 by simply depressing a re-set switch for 3 seconds. Also, depressing the re-set switch momentarily will display a total cumulative count dispensed which is lost only when replacing the battery. In addition, the counter conveniently has three methods of calibration which allow the use of fluid having different viscosities and may be calibrated, for example, in gallons, litres or cubic feet. A built-in calibration allows for low viscosity liquids, i.e. gasoline, diesel fuel, water, with an error of plus or minus 1½%. A single point calibration allows for improved accuracy with low viscosity liquids and an error within plus or minus ½%. A two point calibration allows the meter to be used for high viscosity liquid including viscous fluids such as oils and herbicides with an error within plus or minus 1%.

An additional advantage of the flow meter is that it may be mounted at the nozzle in the end of the delivery hose where it may be easily read by an operator. By placing the flow meter at the delivery end of the hose, the volume of fluid which ordinarily would be in the hose if the flow meter were mounted at the supply end of the hose is eliminated.

The simple calibration procedures as mentioned above allow the invention to be used with a wide range of different types of fluids and at operating temperatures from −25.6°C to +60°C (−14°F to +140°F) and stored at −30°C to +65.5°C (−22°F to +150°F). Further, the flow meter utilises solid state CMOS electronic circuitry for low power consumption and reliability and a waterproof enclosure.

An embodiment of the present invention will now be described, by way of example, with reference to the accompanying drawings in which:-

Figs. 1 and 2 illustrate respectively a side and top view of a flow meter in accordance with the present invention;

Fig. 3 is a side sectional view on the line 3-3 in Fig. 2;

Fig. 4 is an end sectional view on the line 4-4 in Fig. 2;

Fig. 5 is an end sectional view on the line 5-5 in Fig. 2;

Fig. 6A is a diagrammatic end view to a larger scale, showing turbine blade configuration;

Fig. 6B is a diagrammatic view in the direction of arrow B in Fig. 6A showing further features of turbine blade configuration; and

Figs. 7 and 8 are front and rear views of one of stationary shaft supports.

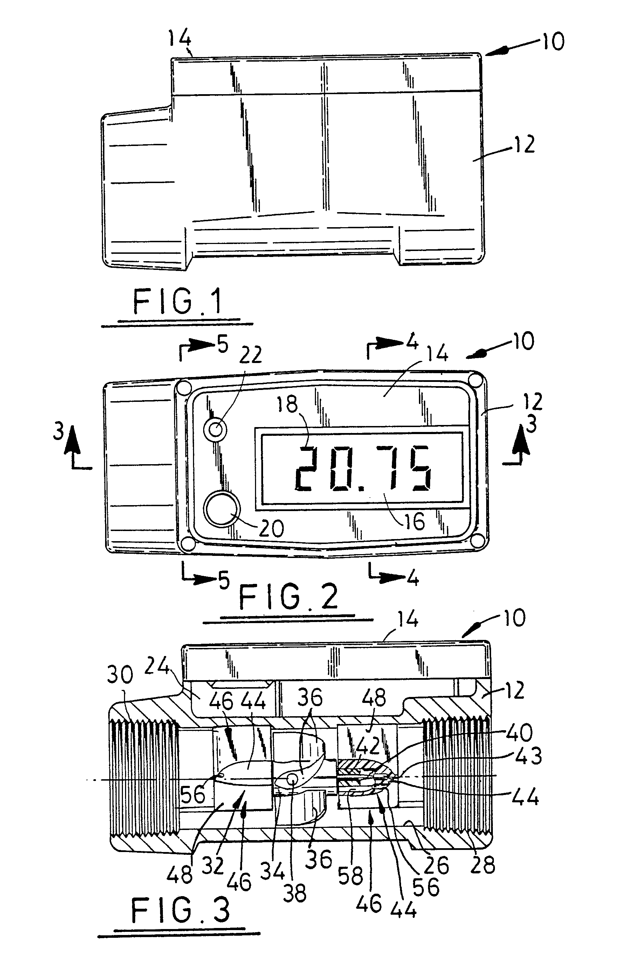

In Figs. 1 and 2, the flow meter is designated by general reference numeral 10. The flow meter includes a meter housing 12 having a display area 14 mounted in the top of the housing 12. In the display area 14 is a liquid crystal display 16 with a digital counter 18 displaying, for example, "20.75" units (gallons) of fluid dispensed. Also shown in the top of the display area 14 is a display button 20 and a calibration button 22 connected to the digital counter 18.

In Fig. 3, the housing 12 can be seen having a display cavity 24 for receiving the electronic counter controls therein. The meter housing 12 further includes a fluid duct 26 therethrough with opposite ends 28 (outlet) and 30 (inlet) threaded for coupling a delivery line. The delivery line is not shown in the drawing.

A turbine designated by general reference numeral 32 is disposed inside the duct 26. The turbine 32 includes a cylindrical turbine rotor 34 with a plurality of four turbine blades 36 equally spaced around the turbine rotor 34 and extending outwardly therefrom. The configuration of each turbine blade is best seen in Figs. 6A and 6B. With reference to a respective tangent 34A to said rotor 34, each said blade 36 has a rotationally leading edge 36A which is linear and substantially normal to the tangent 34A and to the flow direction through the duct 26. The leading edge 36A is spaced ahead of the radial line through the tangent point of contact with the rotor 34. The blade 36 also has a rotationally trailing edge 36B which is linear and substantially parallel to the tangent 34A. A first peripheral portion 36C of the blade extends from the outer extremity of the leading edge 36A and is arcuate when viewed along the axis of the turbine. The blade 36 has a second peripheral portion 36D which intersects the arcuate portion 36C and is straight and substantially normal to the tangent 34A. The blade 36 has an angle of incidence of about 30° which is measured conventionally between the said flow direction and a chord 34B which intersects the leading edge 36A and the second peripheral portion 36D. The surface of the blade 36 which faces the inlet 30 has a convex first surface portion extending from the leading edge 36A and merging into a concave surface portion which terminates at the second peripheral portion 36D. The surface of the blade 36 remote from the inlet 30 is entirely convex. Mounted in the ends of the blades 36 are ferrous slugs 38. The turbine 32 further includes turbine shaft 40 mounted on a support bearing 42 received in a support base 44. The base 44 is part of a shaft support 46. There are two shaft supports 46 and they include a plurality of support arms 48 extending outwardly from the support base 44 with the ends of the arms 48 attached to the sides of the duct 26.

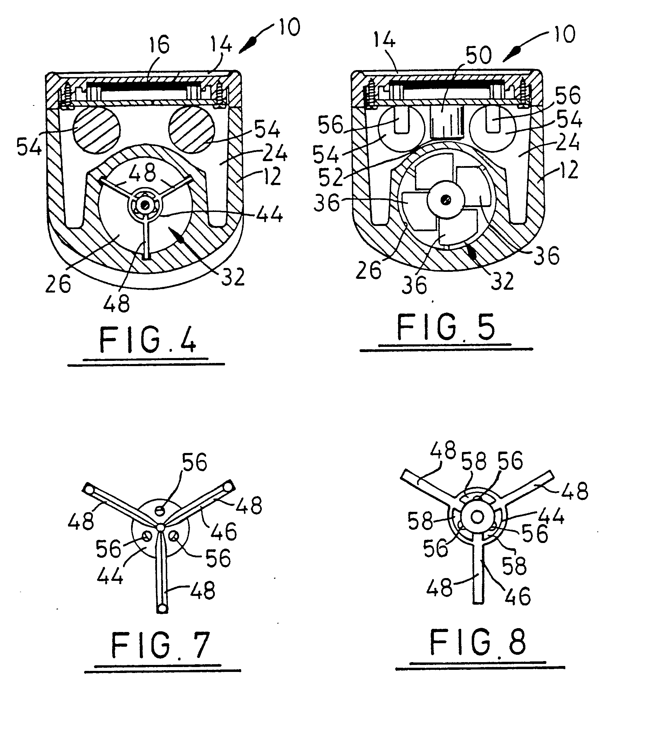

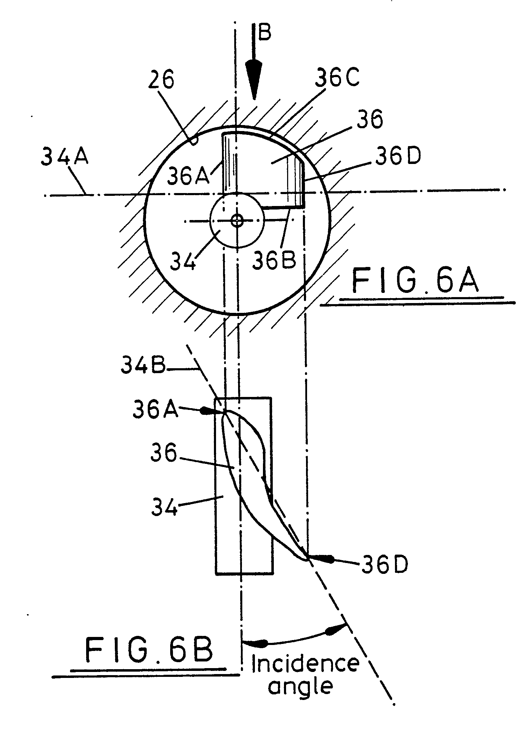

In Figs. 4 and 5, sectional end views of the meter housing 12 can be seen. As the turbine blades 36 rotate on the turbine shafts 40 in the duct 26, the ferrous slugs 38 move adjacent the outer periphery of the duct 26 and past a pickup coil 50 having a magnet 52 mounted in the end thereof. The pickup coil 50 converts the magnetic pulses received by the magnet 52 and converts the magnet pulses to a readable count sent to a microprocessor which is part of the liquid crystal display 16. The microprocessor is a semi-custom chip having a designation, for example, NEC 7502 and having 2048 byte internal ROM and a 128 X 4 CMOS RAM with an on-board multiplexed LCD driver.

One of the shaft supports can be seen with the support base 44 cut-away to expose fluid ports 56 therethrough. These ports 56 can be seen in a front view of the shaft support 46 seen in Fig. 7 and a rear view of the shaft support 46 seen in Fig. 8. The fluid ports 56 open into enlarged fluid cavities 58 at the rear of the support base 44 so as the fluid is transmitted past the turbine 32. The fluid acts as a washing agent for washing around and beside the turbine shaft 40, a thrust bearing 43 and the moving parts of the turbine 32. Further when various types of corrosive fluids are used, a light viscosity washing fluid such as gasoline can be used later for cleaning the insides of the turbine 32 so the fluid meter 10 will be clean for future use in dispensing different types of fluids.

In operation, the flow meter 10 institutes a volumetric flow transducer which displays a digital output on the counter 18 directly proportional to the flow volume. Each digital pulse on the counter 18 represents a discrete volume which is scaled to a desired display increment.

When the battery power is first applied the unit is set by grounding an internal test point. An internal RAM or ROM check is performed and registers are initialized. If all checks are positive, the counter 18 shows 8.8.8.8. to verify all LCD segments. This display remains until the unit is RESET or until five minutes have elapsed since the last activity. At this time, the display counter 18 is cleared. Activity in the meter 10 is defined as pulse counts greater than 5 pulses per second.

During normal operation, 5 minutes after the last activity of the meter 10, the counter 18 clears and the units stores the total cumulative volume since power was applied and the most recent volume since RESET in memory. The unit ignores and does not count or accumulate counts less than 5 pulses per second.

A count ratio, N, in pulses per litre (PPL) (pulses per gallon (PPG)) or any other desired volume measurement is computed for each fluid being transferred based on a calibration sequence performed by the operator. The count ratio is stored and used to compensate for varying flow rates by updating the display based on a linear relationship between frequency and flow rate. A count value N=170 PPL (N=770PPG) is utilized for the internal calibration sequence.

In calibrating the meter 10, three methods of calibration are provided. The first method of calibration allows the operator to calibrate the meter 10 to an internal standard which will have an error not to exceed ± 1½%. First the calibration button 22 is pressed and the display counter 18 shows CAL blinking. Then the calibration button 22 is pressed a second time within five minutes after the first calibration input. The unit will display 00.00. This procedure initializes the count ratio N=170 PPL (N=770 PPG). This count ratio is then used to convert pulses to litres (gallons) for all operations until the next calibration sequence.

The second method of calibration is a single point calibration and is used when working with low viscosity fluids such as gasoline, diesel fuel and the like. The following calibration sequence may be used to reduce the error to within ± ½%: First the calibration button 22 is pressed to display "CAL" blinking. Then the fluid is dispensed into a container capable of holding 5 units of measure having a total volume of no less than 3.64 litres (0.8 gallons). 5 units are then dispensed. As soon as pulses greater than 5 pulses per second are detected, the blinking CAL will stop blinking indicating the calibration mode is in process. When this is completed the operator waits 10 seconds but not more than 5 minutes. The CAL display will blink to indicate that 10 seconds have elapsed.

The unit begins blinking the display when it has received less than 20 counts in the prior 10 second period. After this time, the CAL button 22 is pressed a second time after the display begins to blink. The display now indicates 00.00. The unit stores the count value and initializes to the count ratio, N, of the measured fluid and measures the count ratio to convert pulses to units for all operations until the next calibration sequence.

The last calibration method is a two point calibration used when working with high viscosity fluids such as oils, herbicides, molasses and the like with the following calibration sequence used to ensure an error within ± 1%. First the calibration button 22 is pressed and the display will show "CAL" blinking. Five units of fluid are dispensed into a container capable of indicating 5 units accurately. The CAL display will stop blinking as soon as fluid transfer starts. The operator then waits 10 seconds but not more than 5 minutes. The CAL display starts to blink to indicate that 10 seconds have passed. The operator then dispenses another 5 units of fluid at a reduced flow rate into a container capable of again indicating 5 units accurately. The CAL display will stop blinking as soon as the fluid transfer starts.

Ten seconds are then allowed to elapse but not more than 5 minutes. The CAL dispaly will blink to indicate that 10 seconds have elapsed. The operator then presses the calibration button 22 a second time. The display counter 18 now indicates 00.00.

The meter 10 stores the maximum flow rate count ratio, $N_2$, and stores a reduced flow rate count ratio, $N_1$; and initializes a linear calibration line between the two count ratios. The value of N varies with pulse rate and is updated once during each second during the pumping operation. The computed linear calibration line is then used to convert pulses to units for all operations until the next calibration sequence.

During normal pumping operations, the counter 18 shows the current volume of fluid pumped in units. Counts greater than 5 pulses per second are accumulated with the calibration count ratio applied and the display is updated twice per second. The decimal point shifts right to accommodate more significant digits to the left of the decimal up to a maximum reading of 9999.

The display counter 18 shows the most recent volume in units for five minutes after the last operation. After five minutes, without input and counts, the display goes blank, the final volume is stored and the unit goes into a standby mode to conserve the life of the batteries. The operator may return the unit to operational mode by momentarily, less than three seconds, pressing the display button 20. The counter 18 then shows the accumulative volume dispensed since power up from the first three seconds, then it shows the volume pumped since the last display zero reset. When the operator presses the display button 20 for longer than 3 seconds, the counter 18 shows the total accumulative volume pumped since power up during the first three seconds, then resets the counter 18 to 0 and a display of 00.00. Subsequent transfer of fluid results in new counts to the flow meter 10.

**Claims**

1. A flow meter comprising a housing (12) defining a through duct (26) of circular cross-section and an inlet (30) to and an outlet (28) from the duct (26), a turbine (32) disposed in the duct (26) for rotation on an axis coincident with a longitudinal centre-line of the duct (26), the turbine (32) having a plurality of blades (36) equally spaced around a cylindrical rotor (34); characterised in that with reference to a respective tangent (34A) to said rotor (34), each said blade (36) has a rotationally leading edge (36A) which is linear and substantially normal to said tangent (34A) and to the flow direction through the duct (26) and is spaced ahead of the radial line through the tangent point of contact with the rotor (34),

a rotationally trailing edge (36B) which is linear and substantially parallel to the said tangent (34A),

a first peripheral portion (36C) extending from the outer extremity of the leading edge (36A) and which is arcuate when viewed along said axis,

a second peripheral portion (36D) which intersects said arcuate portion (36C) and which is straight and substantially normal to said tangent (34A),

an angle of incidence of about 30° measured between said flow direction and a chord (34B) intersecting the leading edge (36A) and the second peripheral portion (36D),

the surface of the blade (36) facing the said inlet (30) having a convex first surface portion extending from the leading edge (36A) and merging into a concave surface portion terminating at said second peripheral portion (36D), and

the surface of the blade remote from the said inlet (30) being entirely convex.

2. A flow meter as claimed in claim 1; characterised in that the turbine (32) has four blades (36).

**Patentansprüche**

1. Durchflußmeßgerät, aufweisend ein Gehäuse (12), das einen Durchlaßkanal (26) von kreisrundem Querschnitt und einen Einlaß (30) zu und einen Auslaß (28) von dem Kanal (26) begrenzt, eine Turbine (32), die in dem Kanal (26) zur Rotation auf einer Achse angeordnet ist, die sich mit einer Längsmittellinie des Kanals (26) deckt, wobei die Turbine (32) eine Anzahl von Schaufelblättern (36) aufweist, die abstandsgleich um einen zylindrischen Rotor (34) angeordnet sind, dadurch gekennzeichnet, daß in bezug auf eine jeweilige Tangente (34A) an den Rotor (34) jedes der Schaufelblätter (36) aufweist

eine Rotationsvorlaufkante (36A), die geradlinig und im wesentlichen senkrecht zu der Tangente (34A) und zur Durchflußrichtung durch den Kanal (26) ist und vor der radialen Linie durch den Tangentenberührungspunkt mit dem Rotor (34) beabstandet ist,

eine Rotationsnachlaufkante (36B), die geradlinig und im wesentlichen parallel zu der Tangente (34A) ist,

einen ersten Umfangsabschnitt (36C), der sich von dem äußersten Ende der Vorlaufkante (36A) aus erstreckt und der bogenförmig gekrümmt ist, wenn entlang der Achse gesehen wird,

einen zweiten Umfangsabschnitt (36D), der den bogenförmigen Abschnitt (36C) schneidet und der geradlinig und im wesentlichen senkrecht zu der Tangente (34A) ist,

einen Anstellwinkel von etwa 30°, gemessen zwischen der Durchflußrichtung und einer Sehne (34B), die die Vorlaufkante (36A) und den zweiten Umfangsabschnitt (36D) schneidet,

wobei die Oberfläche des Schaufelblattes (36), die dem Einlaß (30) zugewandt ist, einen konvexen ersten Oberflächenbereich aufweist, der sich von der Vorlaufkante (36A) aus erstreckt und in einen konkaven Oberflächenbereich übergeht, der an dem zweiten Umfangsabschnitt (36D) abschließt, und

die Oberfläche des Schaufelblattes, die entfernt von dem Einlaß (30) ist, vollständig konvex ist.

2. Durchflußmeßgerät nach Anspruch 1, dadurch gekennzeichnet, daß die Turbine (32) vier Schaufelblätter (36) aufweist.

**Revendications**

1. Débimètre comprenant une gaine (12) définissant un conduit traversant (26) de section transversale circulaire, une entrée (30) au conduit (26) et une sortie (28) de celui-ci, une turbine (32) disposée dans le conduit (26) et destinée à tourner autour d'un axe qui coïncide avec un axe longitudinal du conduit (26), la turbine (32) comportant une pluralité d'ailettes (36) également espacées autour d'un rotor cylindrique (34), caractérisé en ce que, avec référence à une tangente (34A) audit rotor (34), chacune desdites ailettes (36) présente:

un bord avant, dans le sens de rotation (36A), qui est rectiligne et sensiblement perpendiculaire à ladite tangente (34A), ainsi qu'à la direction d'écoulement dans le conduit (26) et qui dépasse en avant la ligne radiale passant par le point de contact de la tangente avec le rotor (34),

un bord arrière, dans le sens de rotation, (36B), qui est rectiligne et sensiblement parallèle à ladite tangente (34A),

une première partie périphérique (36C) s'étendant à partir de l'extrémité extérieure du bord avant (36A) et qui est courbe lorsqu'on l'observe le long dudit axe,

une deuxième partie périphérique (36D) qui coupe ladite partie courbe (36C) et qui est rectiligne et sensiblement perpendiculaire à ladite tangente (34A),

un angle d'incidence de 30° environ, mesuré entre ladite direction d'écoulement et une corde (34B) coupant le bord avant (36A) et la deuxième partie périphérique (36D),

une surface de l'ailette (36) tournée vers ladite entrée (30) ayant une première partie de surface convexe qui s'étend à partir du bord avant (36A) et se raccorde à une partie de surface concave se terminant à ladite deuxième partie périphérique (36D), et

une surface de l'ailette éloignée de ladite entrée (30) étant entièrement convexe.

2. Débimètre suivant la revendication 1, caractérisé en ce que la turbine (32) comporte quatre ailettes (36).

FIG.1

FIG.2

FIG.3

FIG. 4

FIG. 5

FIG. 7

FIG. 8

26
36C
36
36D
34A
36A
34
36B

FIG.6A

34B
36A
36
34
36D

FIG.6B
Incidence
angle

3